(19) **Europäisches Patentamt**
**European Patent Office**
**Office européen des brevets**

(11) **EP 3 593 010 B1**

(12) **FASCICULE DE BREVET EUROPEEN**

(45) Date de publication et mention
de la délivrance du brevet:
**14.04.2021  Bulletin 2021/15**

(21) Numéro de dépôt: **18706993.5**

(22) Date de dépôt: **19.02.2018**

(51) Int Cl.:
*F16H 21/04* *(2006.01)*      *F16H 25/20* *(2006.01)*

(86) Numéro de dépôt international:
**PCT/EP2018/054021**

(87) Numéro de publication internationale:
**WO 2018/162213 (13.09.2018 Gazette 2018/37)**

(54) **DISPOSITIF DE GUIDAGE A PSEUDO PARALLELOGRAMMES FLEXIBLES A HAUTE RESISTANCE A LA FATIGUE**

FÜHRUNGSVORRICHTUNG MIT FLEXIBLER ERMÜDUNGSBESTÄNDIGKEIT GEGEN PSEUDO-PARALLELOGRAMME

GUIDANCE DEVICE WITH FLEXIBLE HIGH FATIGUE RESISTANCE PSEUDO-PARALLELOGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2017  FR 1751841**

(43) Date de publication de la demande:
**15.01.2020  Bulletin 2020/03**

(73) Titulaire: **Commissariat à l'Énergie Atomique et aux Énergies Alternatives**
**75015 Paris (FR)**

(72) Inventeurs:
• **BECK, Maxime**
**75014 Paris (FR)**
• **GROSSARD, Mathieu**
**91370 Verrieres le Buisson (FR)**

(74) Mandataire: **Marks & Clerk France**
**Immeuble "Visium"**
**22, avenue Aristide Briand**
**94117 Arcueil Cedex (FR)**

(56) Documents cités:
**DE-A1-102008 051 544      FR-A1- 3 018 327**
**US-A1- 2014 298 934**

**Description**

La présente invention concerne un dispositif de guidage à pseudo parallélogrammes flexibles à haute résistance à la fatigue. Elle s'applique notamment pour le guidage d'organes nécessitant des mouvements de translation purs et précis.

Il est connu que les systèmes poly-articulés de type parallélogramme assurent des mouvements guidage. Il est également connu de les remplacer par des systèmes à parallélogrammes à poutres flexibles, à simple ou double parallélogramme. Ces systèmes présentent notamment un grave inconvénient qui est leur faible tenue aux contraintes. En effet, le guidage est assuré notamment par la flexion des poutres provoquant des contraintes mécaniques, en particulier au niveau des points d'ancrage de celles-ci, mais pas seulement. En fonctionnant, ces systèmes de guidage sont ainsi soumis en permanence à des contraintes provoquant des ruptures dans des laps de temps relativement courts selon les applications. En règle générale ces systèmes n'ont pas une grande résistance à la fatigue et ont donc une durée de vie limitée.

Un document DE 10 2008 051544 A1 divulgue un dispositif d'entraînement à broche comportant un dispositif de guidage.

Un but de l'invention est notamment d'augmenter la résistance à la fatigue de ces systèmes de guidage à parallélogramme, et donc d'augmenter significativement leur durée de vie.

A cet effet, l'invention a pour objet un dispositif de guidage apte à guider un organe en translation tel que décrit dans la revendication 1.

Dans un mode de réalisation possible, lesdites poutres comportent plusieurs sections rectilignes, les sections partant des extrémités desdites poutres étant parallèles.

Lesdites poutres ont par exemple des sections non constantes, la section étant par exemple minimale au centre et/ou maximale au niveau des points de fixation desdites poutres.

Ledit dispositif est par exemple de structure monolithique.

Ladite structure mécanique est par exemple mobile.

Ladite structure mécanique centrale est par exemple traversée par un écrou qui lui est lié rigidement, ledit organe étant une vis coopérant avec ledit écrou.

D'autres caractéristiques et avantages de l'invention apparaîtront à l'aide de la description qui suit, faite en regard de dessins annexés qui représentent :

- La figure 1, un système de guidage à double parallélogramme ;
- La figure 2, une structure de type parallélogramme utilisée dans le système précédent ;
- La figure 3, un exemple de réalisation d'un dispositif de guidage selon l'invention, par une vue en perspective, ayant une haute résistance à la fatigue ;
- La figure 4, le dispositif de la figure 3 par une vue en coupe ;
- La figure 5, un exemple de réalisation d'un système de préhension intégrant un dispositif de guidage selon l'invention ;
- La figure 6, un cycle de saisie et de dépose par le système précédent ;
- La figure 7, un dispositif d'actionnement à vis équipé d'un système d'anti-rotation réalisé par un dispositif selon l'invention.

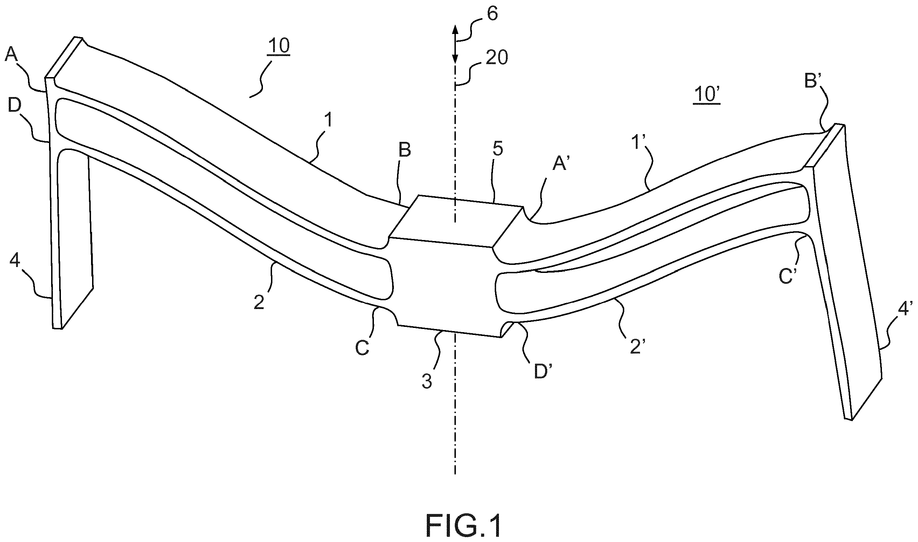

La figure 1 présente un système de guidage à double parallélogrammes. Il est composé d'un premier parallélogramme 10 et d'un deuxième parallélogramme 10', tous deux déformables, reliés par une structure centrale 3. Chaque parallélogramme comporte deux poutres flexibles 1, 2, 1', 2' parallèles formant deux premiers côtés, flexibles. Les deux autres côtés du parallélogramme sont rigides et constitués d'une part d'une paroi de la structure centrale 3 et d'autre part de tout ou partie d'une interface mécanique 4, 4'.

La structure centrale 3 est apte à interfacer avec un organe à guider, en lui étant lié rigidement par exemple. Les interfaces 4, 4' sont aptes à être fixées sur une structure mécanique, fixe ou mobile.

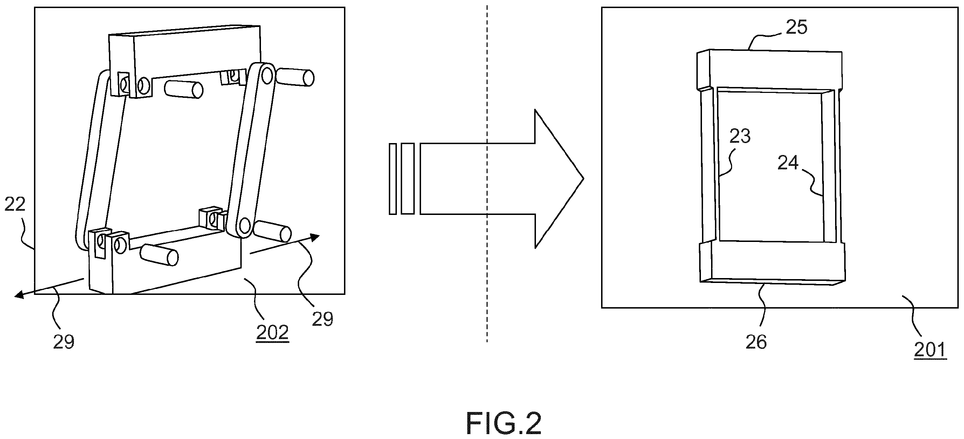

La figure 2 présente une structure parallélogramme monolithique 201 du type de celles 10, 10' utilisées dans le système à double parallélogramme de la figure 1. Cette structure parallélogramme est composée de deux côtés rigides opposés 25, 26 reliés par deux poutres flexibles 23, 24 parallèles. Ces poutres agissent comme un système de guidage flexible en fléchissant en leurs points d'accroche, tout en étant raides en traction. Cette structure parallélogramme à poutres flexibles permet de remplacer le guidage 29 obtenu par une structure parallélogramme poly-articulée 202, avec pivots de rotations.

Les poutres 23, 24 souples en flexion et raides en traction permettent d'obtenir un guidage selon des mouvements rectilignes purs, c'est-à-dire précis, parallèlement aux deux autres côtés 25, 26 du parallélogramme auxquels sont accrochées les poutres.

Un système à double parallélogramme du type de la figure 1 permet donc de guider précisément un organe lié à la structure centrale 3 tandis que les interfaces 4, 4' sont fixées sur une structure, le guidage étant réalisé par rapport à cette structure. En d'autres termes, on obtient une translation pure, ou quasi pure.

Le point d'entrée 5 du système est solidaire mécaniquement de la structure centrale. C'est en ce point 5 qu'un déplacement est imposé. Plus précisément, le mouvement de translation est obtenu par une force exercée sur la structure mécanique centrale 3 parallèlement audit axe de symétrie. En pratique, le guidage d'un organe lié mécaniquement à cette structure centrale 3 est réalisé par actionnement de cet organe, cet actionnement exerçant une force sur la structure centrale 3. Des exemples de guidages seront décrits par la suite.

Dans ce mécanisme, symétrique par rapport à l'axe de guidage 20, les points d'ancrage A, B, C, D, A', B', C', D' des poutres sur les interfaces 4, 4' et sur la structure centrale 3 sont soumis à des concentrations de contraintes qui peuvent diminuer fortement la durée de vie du mécanisme en raison des ruptures susceptibles de se produire en ces points d'ancrage.

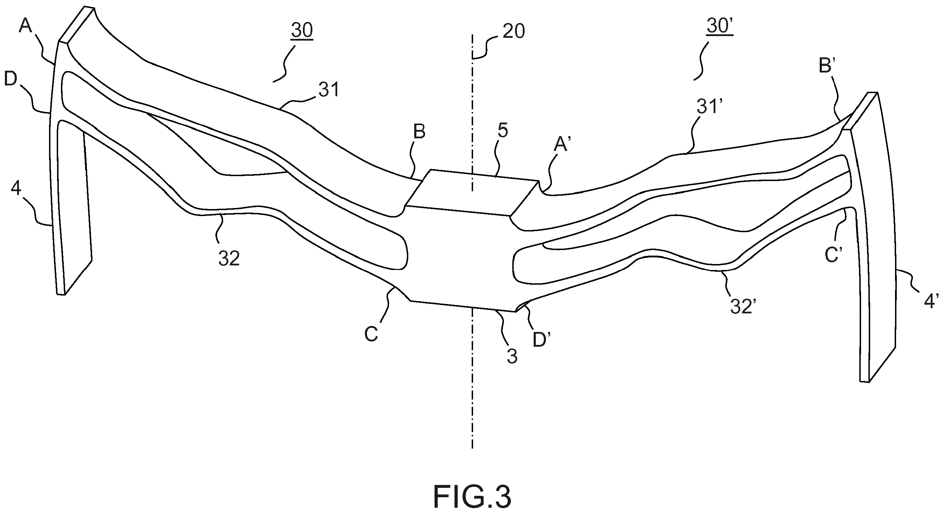

La figure 3 présente un exemple de réalisation d'un dispositif de guidage selon l'invention. Ce dispositif ne comporte plus deux parallélogrammes comme dans le cas de la figure 1, mais deux pseudo-parallélogrammes 30, 30' dans ce sens que les poutres flexibles 31, 32, 31', 32' formant deux premiers côtés de chaque pseudo-parallélogramme 30, 30' ne sont plus rectilignes et parallèles. Néanmoins, les extrémités A, B, C, D, A', B', C', D' de chaque pseudo parallélogramme forment toujours un parallélogramme.

Les poutres flexibles sont toujours reliées d'une part à la structure centrale 3 et d'autre part à une interface 4, 4' par les points d'ancrage formant les extrémités A, B, C, D, A', B', C', D' des parallélogrammes. Elles sont courbes et non parallèles comme l'illustre la figure 3. Chaque poutre comporte par exemple plusieurs sections rectilignes ayant des orientations différentes. Les sections partant de la structure centrale ou des interfaces sont par exemple parallèles.

Le guidage d'un organe est obtenu selon le même principe que celui décrit pour la figure 1. Cependant, dans un dispositif selon l'invention conformément à l'exemple de la figure 3, les contraintes maximales sont réduites.

En effet, lorsque l'on étudie la répartition des contraintes au sein d'un mécanisme à poutres parallèles et droites, on peut observer que cette répartition des contraintes n'est pas la même entre les deux poutres en vis-à-vis, d'un même parallélogramme. En position de repos les poutres sont bien droites et bien parallèles. En revanche sous charge, lorsqu'un déplacement est imposé en entrée 5, la courbure des poutres n'est pas la même et le parallélisme n'est plus vérifié. Les contraintes ne sont donc plus les mêmes car des sollicitations simultanées en traction font leur apparition. Ainsi, pour éviter qu'une poutre soit plus sollicitée que l'autre et que la répartition de l'une à l'autre ne soit pas homogène, selon l'invention on réalise un système à double poutres (pseudo-parallélogramme précédemment décrit) où les poutres ne sont plus parallèles, les points d'ancrage A, B, C, D, A', B', C', D', extrémités du pseudo-parallélogramme, formant toujours un parallélogramme.

En guidage, la trajectoire d'un organe guidée par le dispositif est toujours assimilable à une translation pure le long de l'axe de symétrie 20. La souplesse des poutres dans la dimension parallèle à cet axe, couplée à la rigidité des poutres dans le sens perpendiculaire (dans la largeur des poutres), permet d'obtenir une telle translation, la composante de rigidité bloquant les mouvements de rotations parasites.

La longueur des poutres étant par exemple de l'ordre de 40 mm, le déplacement 6 en translation peut être alors de l'ordre de 10 mm.

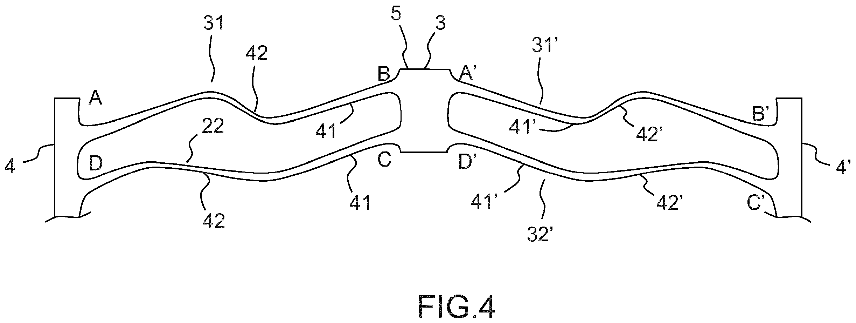

Un dispositif selon l'invention peut également comporter des poutres 31, 32, 31', 32' à section non constante comme illustré également par la figure 3. On se réfère à la figure 4, présentant une vue en coupe, pour décrire un dispositif à sections variables.

La figure 4 présente, comme la figure 3, un exemple de réalisation avec des poutres à sections variables, améliorant l'homogénéisation des contraintes mécaniques sur les poutres.

Lorsqu'elles sont sous charge, c'est-à-dire qu'un déplacement est imposé en entrée 5 du mécanisme, les poutres 31, 32, 31', 32' sont soumises à un gradient de contraintes. Ainsi, certains points de la courbe formée par une poutre (que l'on peut paramétrer en abscisse curviligne), sont les lieux de contraintes très élevées ou a contrario, de contraintes quasi nulles (ces lieux étant appelés points neutres). Globalement, les points neutres 42, 42' sont positionnés sensiblement à mi-longueur des poutres et les concentrations des contraintes se trouvent aux points d'ancrage.

Un objectif de l'optimisation par section variable est d'obtenir une contrainte homogène dans chaque poutre. On agit localement sur les épaisseurs pour homogénéiser les contraintes.

Dans l'exemple de réalisation de la figure 4, on introduit des sections variables au sein des poutres flexibles. En augmentant localement leur épaisseur, on diminue localement la contrainte. L'épaisseur est augmentée aux endroits 41, 41', en particulier la section est maximale au niveau des points d'ancrage A, B, C, D, A', B', C', D' des poutres sur les parties rigides 3, 4, 4' puis diminue vers le centre des poutres, au niveau des points neutres 42, 42'.

Inversement, en enlevant de la matière sur ces points de contrainte minimale 42, 42', on peut augmenter localement les contraintes internes.

La section variable a notamment pour effet d'homogénéiser le gradient de contraintes et donc d'atténuer les concentrations de contrainte au sein d'une même poutre. En supprimant les points de concentration de ces contraintes, on augmente encore la durée de vie du dispositif selon l'invention.

L'homogénéisation ne peut être parfaite, en effet, il faudrait tendre vers une épaisseur de poutre nulle aux endroits 42, 42' de contrainte nulle. Cependant, la répartition non constante du volume ou de densité de matière selon l'axe longitudinal des poutres, comme illustré par les figures 3 et 4, permet de mieux répartir et uniformiser les contraintes sur toute la longueur des poutres et donc d'augmenter encore leur durée de vie.

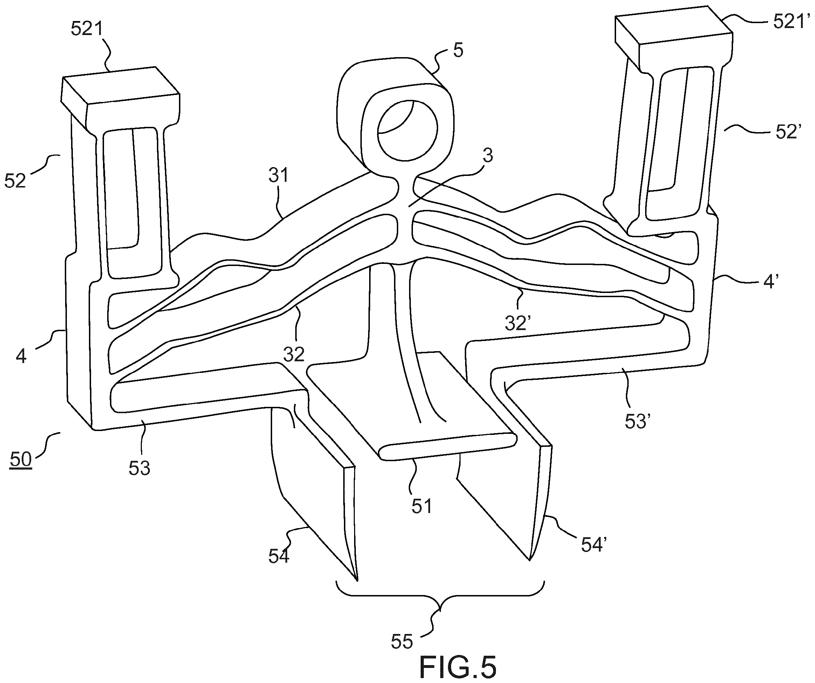

La figure 5 présente un premier exemple d'utilisation d'un dispositif de guidage selon l'invention. Dans cet exemple, celui-ci est intégré dans une pince de préhension 50 et il a notamment pour fonction d'assurer la translation d'un plateau poussoir 51. Ce dernier est solidaire mécaniquement de la structure centrale 3. Les interfaces mécaniques 4, 4' sont reliées chacune à un parallélogramme flexible 52, 52' lui-même apte à être relié par un de ses côtés 321, 321' à une structure mécanique, fixe par exemple. Les interfaces 4, 4' sont par ailleurs reliées chacune à un mors 54, 54' d'une pince 55, par l'intermédiaire d'un bras 53, 53'. L'ensemble est activé par le point d'entrée 5, matérialisé par une boucle.

Un dispositif de préhension illustré par la figure 5 peut avantageusement être utilisé pour la préhension d'objets fragiles, comprenant des phases de saisie et de dépose.

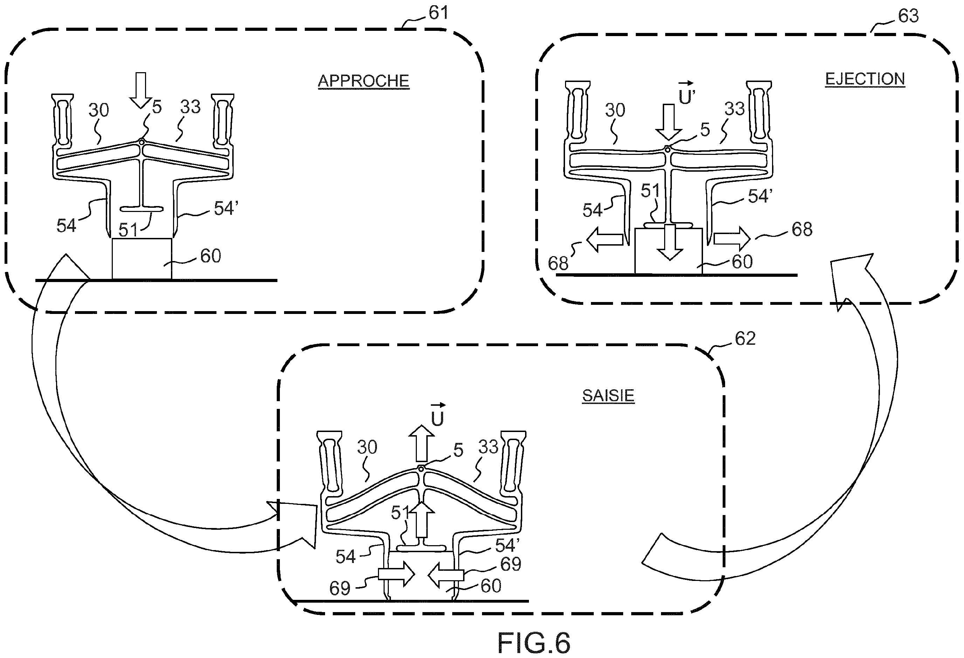

La figure 6 illustre un cycle de saisie et de dépose d'un objet souple 60 par un dispositif selon la figure 5. Pour des facilités de représentation, les poutres des pseudo-parallélogrammes 30, 30' sont représentées parallèles et rectilignes.

Ce cycle comporte une phase d'approche 61, une phase de saisie de l'objet 62 et une phase d'éjection de l'objet 63.

Dans la phase d'approche 61, le plateau 51 est sans contact avec l'objet et les mors sont en position ouverte. La structure sur lequel est fixé le dispositif de préhension est par exemple un bras robotique dont le mouvement est guidé vers l'objet, entraînant le guidage du dispositif vers l'objet. En fin de phase d'approche les mors arrivent au niveau de l'objet et le plateau 51 effleure l'objet.

Dans la phase de saisie 42, une force d'activation U est exercée sur le point d'activation ou point d'entrée 5, dans la direction opposée aux mors 54, 54', provoquant le serrage 69 de l'objet par les mors, faisant fonction de pince, et provoquant le guidage du plateau 51 vers le haut.

Dans la phase d'éjection, une force contraire d'activation U' est exercée sur le point d'activation 5, dans la direction des mors, provoquant l'ouverture des mors, donc le desserrage 68 de l'objet, et le guidage du plateau 51 vers bas jusque entre les mors, le plateau faisant alors fonction de poussoir de l'objet. En pratique, le déplacement du point d'activation 5 dans un sens ou dans l'autre peut être inférieur à un centimètre, de l'ordre de 7mm par exemple. Le dispositif de préhension est sous-actionné, c'est-à-dire qu'il comporte plus de degrés de liberté que d'actionneur. En effet, un seul point d'actionnement 5 permet d'obtenir, dans une phase 62, le resserrement contrôlé des mors autour de l'objet 60, puis dans une phase suivante 463, une dépose garantie par translation pure du plateau poussoir 51 vers l'objet. La translation pure du plateau 51 perpendiculaire à la trajectoire d'ouverture des mors 54, 54' permet d'éviter l'adhésion de l'objet sur les mors et de corriger les défauts de positionnement final lors de la dépose. Cette dépose peut être réalisée selon un positionnement précis de l'objet dans un contenant par exemple.

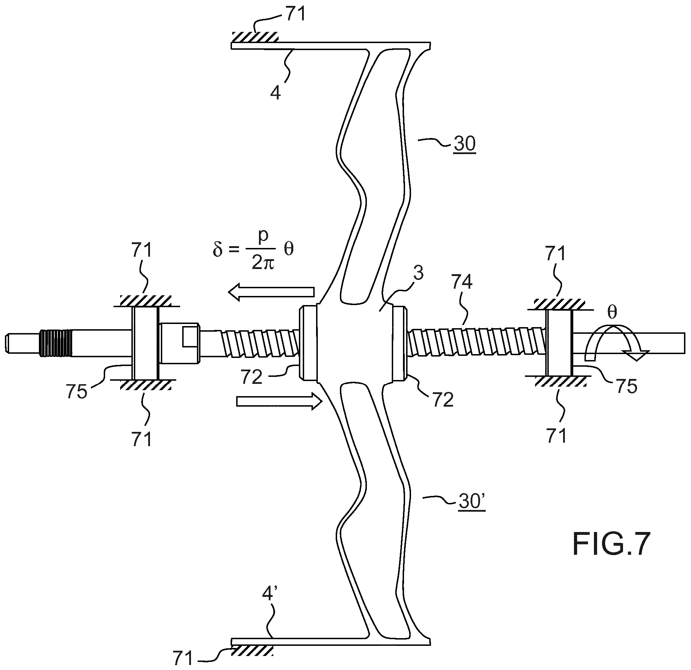

La figure 7 illustre un autre exemple d'utilisation d'un dispositif de guidage selon l'invention. Ce dispositif peut avantageusement être utilisé dans des applications où des mouvements rectilignes à grands débattements et durée de vie importante sont nécessaires, très bien adapté à l'exemple d'application de la figure 7.

On se réfère par exemple au système de vérin à câble, décrit dans la demande de brevet FR 3 004 230 A1, plus particulièrement à la figure 1 de ce document. Dans le mécanisme décrit, la vis est entraînée en rotation par un moteur électrique. Un écrou coopère avec la vis et est associé à un dispositif d'anti-rotation comportant deux bras et un galet, les deux bras s'étendant de part et d'autre de l'écrou pour porter des galets engagés dans des lumières longitudinales afin de bloquer les mouvements de rotation. Dans cette fonction d'anti-rotation, l'écrou en question doit être arrêté en rotation pour accomplir un mouvement d'aller-retour linéaire rectiligne le long de l'axe de la vis et transmettre ainsi un effort, par exemple par le biais de câbles ancrés à des poulies articulaires. Le mécanisme de la figure 7 permet d'atteindre cet objectif.

Dans ce montage, le dispositif selon l'invention est lié rigidement, par ses interfaces mécaniques 4, 4' (au niveau des pieds interfaces pour permettre la flexion des poutres car un effort de traction est résiduel), à un support fixe 71, par exemple le châssis référencé 1 sur la figure 1 du document FR 3 004 230 A1. La structure centrale 3 est par ailleurs traversée par un écrou 72, qui lui est lié rigidement. Cet écrou 72 coopère avec une vis 74, du type par exemple de la vis 2 du document précité. Cette vis 74 est maintenue sur la structure fixe 71, par exemple le châssis 1 du document précité, par l'intermédiaire de deux supports 75 dans lesquels coulisse la tige prolongeant la vis. Elle est entraînée en rotation par un moteur non représenté. Une rotation de la vis d'un angle θ entraîne un déplacement δ tel que $\delta = \frac{P}{2\pi}\theta$.

Grâce au dispositif selon l'invention, formant un système d'anti-rotation dans cette application, l'écrou 72 est en montage isostatique, ce qui permet d'éviter des contraintes internes, donc de favoriser sa transparence et ainsi le ressenti utilisateur en phase de retour d'effort.

Dans cette application, il y a une position de repos, correspondant au minimum énergétique, et un retour à cette position par une force de rappel, le dispositif selon l'invention, flexible, étant assimilable à un ressort de raideur K constante et connue.

Dans le système décrit à la figure 1 du document précité, l'anti-rotation se fait par le biais de galets (roulements) qui roulent sur des lumières longitudinales. Il y a donc du jeu de fonctionnement entre un galet et la surface de contact au sein même du roulement, ce qui est une cause d'imprécision notamment lors d'un changement de sens de translation (changement de sens de rotation θ). Le frottement de roulement du galet contribue à augmenter le seuil de frottement d'adhérence, le frottement sec et le frottement visqueux de l'actionneur en général. Il est très difficile d'anticiper complètement et d'intégrer ce frottement dans les lois de commande. De plus, la faible masse et inertie du dispositif à vis contribue aussi à l'augmentation de la transparence de la transmission.

Le caractère monolithique de la structure du dispositif selon l'invention simplifie le montage en minimisant le nombre de composants.

L'amélioration de la transparence favorise la réversibilité de l'actionnement, ce qui permet un retour plus fidèle ainsi qu'un contrôle en effort par mesure directe du courant moteur. La souplesse constante et connue du dispositif selon l'invention peut entrer en compte dans le modèle de l'actionneur et permet de remonter aux efforts extérieurs appliqués sur l'actionneur. La présence d'un capteur d'effort devient inutile.

En associant ce système anti-rotation flexible (réalisé par le dispositif selon l'invention) à un actionneur, le mouvement et le contrôle sont plus précis en raison de l'absence de jeu et de frottements (mouvement de translation pure), plus simple, plus compact, plus léger donc moins inertiel. La manipulation est plus facile pour l'utilisateur dont le ressenti est très important en robotique collaborative ou en télé-opération.

D'autres applications de guidage utilisant un dispositif selon l'invention sont bien sûr possibles. Un tel dispositif permet avantageusement des mouvements de translation pure, par de grands débattements en flexion du pseudo-parallélogramme, tout en présentant une haute résistance à la fatigue.

Avantageusement le dispositif selon l'invention est monolithique, fabriqué dans un seul matériau. Le matériau utilisé peut être un polymère de type polyoxyméthylène, POM homopolymère ou copolymère d'acétal, polyétheréthercétone également désigné sous le sigle PEEK, polyamide ou polyimide. Il n'y a pas de jeu, ni de frottements, garantissant une précision de déplacement.

Bon marché et robuste, de masse réduite, un dispositif selon l'invention est facilement fabriqué par dépôt de polymère fondu, ou par découpage laser, voire par découpe en commande numérique. Tous les composants du dispositif et notamment les poutres peuvent être usinés dans un seul bloc de matière.

Un dispositif selon l'invention est un système monolithique flexible, équivalent à un système cinématique poly-articulé, qui ne nécessite pas d'assemblage, évite les phénomènes d'encrassement, facilite le nettoyage et la fabrication.

**Revendications**

1. Dispositif de guidage apte à guider un organe (51, 74) en translation, comportant :

   - deux paires (30, 30') de poutres flexibles (31, 32, 31', 32') symétriques par rapport à un axe (20), les deux poutres d'une paire étant courbes et non parallèles entre elles ;
   - une structure mécanique centrale (3) parcourue par ledit axe (20), sur laquelle sont fixées lesdites paires de poutres en des points de fixation (B, C, A', D'), ladite structure mécanique étant apte à être liée mécaniquement audit organe (51, 74) ;
   - **caractérisé en ce qu'**il comporte de plus deux interfaces mécaniques (4, 4') sur chacune desquelles est fixée une paire de poutres en des points de fixation (A, B, C', D'), lesdites interfaces étant aptes à être fixées sur une structure mécanique (71) ; les deux ensembles de points de fixation (A, B, C, D, A', B', C', D') situés de part et d'autre dudit axe de symétrie formant chacun un parallélogramme, le guidage dudit organe étant obtenu par une force exercée sur ladite structure mécanique centrale parallèlement audit axe de symétrie.

2. Dispositif selon la revendication 1, **caractérisé en ce que** lesdites poutres (31, 32, 31', 32') comportent plusieurs sections rectilignes, les sections partant des extrémités desdites poutres étant parallèles.

3. Dispositif selon l'une quelconque des revendications précédentes, **caractérisé en ce que** lesdites poutres (31, 32, 31', 32') ont des sections non constantes.

4. Dispositif selon la revendication 3, **caractérisé en ce que** la section est minimale au centre (42, 42') desdites poutres.

5. Dispositif selon l'une quelconque des revendications 3 ou 4, **caractérisé en ce que** la section est maximale au niveau (71) des points de fixation desdites poutres.

6. Dispositif selon l'une quelconque des revendications précédentes, **caractérisé en ce qu'**il est de structure monolithique.

7. Dispositif selon l'une quelconque des revendications précédentes, **caractérisé en ce que** ladite structure mécanique (71) est mobile.

8. Dispositif selon l'une quelconque des revendications précédentes, **caractérisé en ce que** ladite structure mécanique centrale (3) est traversée par un écrou (72) qui lui est lié rigidement, ledit organe étant une vis (74) coopérant avec ledit écrou.

**Patentansprüche**

1. Führungsvorrichtung, welche in der Lage ist, ein Organ (51, 74) in Translation zu führen, Folgendes umfassend:

- zwei Paare (30, 30') flexibler Balken (31, 32, 31', 32'), welche symmetrisch in Bezug auf eine Achse (20) sind, wobei die beiden Balken eines Paars gekrümmt und nicht parallel zueinander sind;
- eine mittlere mechanische Struktur (3), welche durch die Achse (20) durchquert wird, auf welcher die Paare von Balken an Befestigungspunkten (B, C, A', D') befestigt sind, wobei die mechanische Struktur in der Lage ist, mechanisch mit dem Organ (51, 74) verbunden zu werden;

**dadurch gekennzeichnet, dass**

- sie ferner zwei mechanische Schnittstellen (4, 4') umfasst, an welchen jeweils ein Paar Balken an Befestigungspunkten (A, B, C', D') befestigt ist, wobei die Schnittstellen in der Lage sind, an einer mechanischen Struktur (71) befestigt zu werden;

wobei die beiden Gruppen von Befestigungspunkten (A, B, C, D, A', B', C', D'), welche beiderseits der Symmetrieachse angeordnet sind, jeweils ein Parallelogramm bilden, wobei die Führung des Organs durch eine auf die mittlere mechanische Struktur ausgeübte Kraft parallel zur Symmetrieachse erzielt wird.

2. Vorrichtung nach Anspruch 1, **dadurch gekennzeichnet, dass** die Balken (31, 32, 31', 32') mehrere geradlinige Abschnitte umfasst, wobei die von den Enden der Balken abgehenden Abschnitte parallel sind.

3. Vorrichtung nach einem der vorhergehenden Ansprüche, **dadurch gekennzeichnet, dass** die Balken (31, 32, 31', 32') nicht konstante Querschnitte aufweisen.

4. Vorrichtung nach Anspruch 3, **dadurch gekennzeichnet, dass** der Querschnitt minimal im Mittelpunkt (42, 42') der Balken ist.

5. Vorrichtung nach einem der Ansprüche 3 oder 4, **dadurch gekennzeichnet, dass** der Querschnitt maximal auf Höhe (71) der Befestigungspunkte der Balken ist.

6. Vorrichtung nach einem der vorhergehenden Ansprüche, **dadurch gekennzeichnet, dass** sie eine Monolithstruktur aufweist.

7. Vorrichtung nach einem der vorhergehenden Ansprüche, **dadurch gekennzeichnet, dass** die mechanische Struktur (71) beweglich ist.

8. Vorrichtung nach einem der vorhergehenden Ansprüche, **dadurch gekennzeichnet, dass** die mittlere mechanische Struktur (3) durch eine Mutter (72) durchquert wird, die starr mit ihr verbunden ist, wobei das Organ eine mit der Mutter zusammenarbeitende Schraube (74) ist.

**Claims**

1. A guidance device capable of translationally guiding a component (51, 74), comprising:

- two pairs (30, 30') of flexible beams (31, 32, 31', 32') that are symmetrical relative to an axis (20), the two beams of a pair being curved and not parallel to each other;
- a central mechanical structure (3) intersected by said axis (20), on which structure said pairs of beams are fixed at fixing points (B, C, A', D'), said mechanical structure being capable of being mechanically linked to said component (51, 74);

**characterised in that** it further comprises:

- two mechanical interfaces (4, 4') each having a pair of beams fixed thereto at fixing points (A, B, C', D'), said interfaces being capable of being fixed on a mechanical structure (71); the two sets of fixing points (A, B, C, D, A', B', C', D') located either side of said axis of symmetry each forming a parallelogram, the guidance of said component being obtained by a force exerted on said central mechanical structure parallel to said axis of symmetry.

2. The device according to claim 1, **characterised in that** said beams (31, 32, 31', 32') comprise several straight sections, with the sections starting from the ends of beams being parallel.

3. The device according to any one of the preceding claims, **characterised in that** said beams (31, 32, 31', 32') have non-constant sections.

4. The device according to claim 3, **characterised in that** the section is minimal at the centre (42, 42') of said beams.

5. The device according to any one of claims 3 or 4, **characterised in that** the section is maximal at the level (71) of the fixing points of said beams.

6. The device according to any one of the preceding claims, **characterised in that** it has a monolithic structure.

7. The device according to any one of the preceding claims, **characterised in that** said mechanical structure (71) is movable.

8. The device according to any one of the preceding claims, **characterised in that** said central mechanical structure (3) is traversed by a nut (72), which is rigidly connected to it, said component being a screw (74) engaging with said nut.

FIG.1

FIG.2

FIG.3

EP 3 593 010 B1

FIG.4

FIG.5

EP 3 593 010 B1

FIG.6

$$\delta = \frac{p}{2\pi}\theta$$

FIG.7

EP 3 593 010 B1

**RÉFÉRENCES CITÉES DANS LA DESCRIPTION**

**Documents brevets cités dans la description**

- DE 102008051544 A1
- FR 3004230 A1